**Europäisches Patentamt**

**European Patent Office**

**Office européen des brevets**

(19)

(11) **EP 1 594 122 A1**

(12) **EUROPEAN PATENT APPLICATION**

(43) Date of publication:
**09.11.2005 Bulletin 2005/45**

(51) Int Cl.⁷: **G10L 19/00**, G11B 20/00,
H04N 1/32, G06T 1/00

(21) Application number: **04090177.9**

(22) Date of filing: **06.05.2004**

| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Baum, Peter G.**<br>  **30539 Hannover (DE)**<br>• **Voessing, Walter**<br>  **30455 Hannover (DE)** |
| --- | --- |
| (71) Applicant: **DEUTSCHE THOMSON-BRANDT GMBH**<br>**78048 Villingen-Schwenningen (DE)** | (74) Representative: **Hartnack, Wolfgang**<br>**Deutsche Thomson-Brandt GmbH**<br>**European Patent Operations**<br>**Karl-Wiechert-Allee 74**<br>**30625 Hannover (DE)** |

(54) **Spread spectrum watermarking**

(57)    Spread spectrum technology can be used for implementing watermarking of digital audio signals, whereby the watermark signal can be modulated by a spreading function or a PN sequence before it is shaped according to psycho-acoustical laws and thereafter combined with the audio signal. At decoder side the watermark signal which is embedded in the audio signal is reverse shaped and is thereafter convolved with a spreading function or a PN sequence that is time-inverse with respect to the original spreading function or PN sequence, or is thereafter correlated with the original spreading function or PN sequence. According to the invention, the watermark signal is not only shaped according to psycho-acoustic principles, but is additionally shaped based on the efficiency of the watermarking whereby on average the magnitude of the watermark signal that is embedded in the useful signal is decreased without affecting its detectability at receiver side. The reverse psycho-acoustic shaping at decoder side can be replaced by whitening the received spectrum before applying the decoder PN sequence on the watermark signal.

Fig.1

EP 1 594 122 A1

## Description

The invention relates to a method and an apparatus for transmitting together with an audio or video signal watermark data using a spread spectrum, and for regaining watermark data embedded in a spread spectrum.

Background

'Watermarking' means imperceptible insertion of information into multimedia data, e.g. audio data and/ or video data, i.e. watermark signals that are embedded in an audio signal should not be audible. The insertion of additional information data, such as a number or a text, into multimedia data is performed through slight modification of the original multimedia data. Watermarking can be used for e.g. copyright protection, labelling (e.g. URL of a site or a site's logo), monitoring, tamper proofing, or conditional access.
Applying 'spread spectrum' in an (RF) communications system, means that a small baseband signal bandwidth is intentionally spread over a larger bandwidth by injecting or adding a higher-frequency signal, or spreading function. Thereby the energy used for transmitting the signal is spread over a wider bandwidth, and appears as noise.
Spread spectrum technology and the related inserted or added information signal can be used for implementing watermarking of e.g. digital audio signals. This spectrum carries the information of one watermark data symbol. At encoder side a spreading function or a so-called pseudo-noise (PN) sequence is modulated by the watermark data to be inserted in the signal. The spreading function or the PN sequence and the resulting signal have energy in a very broad frequency range. The wideness of this frequency band can be adjusted within the complete audio spectrum range from 0Hz to one half of the sampling frequency.
This watermark signal must be large enough to be recoverable even in the presence of noise or 'attacks' between watermark encoder and watermark decoder, and it must be small enough to be inaudible or invisible. One solution in connection with audio signals is to shape the watermark signal according to psycho-acoustical laws, i.e. to reduce it in magnitude so that it has a level that is below the masking threshold, whereafter the shaped watermark signal is added to the original signal.

A known processing for retrieving at receiver or decoder side the embedded watermark signal data from the spread spectrum is convolving or correlating the received or replayed spectrum with a spreading function or PN sequence that is - only for convolving - time-inverse with respect to the original spreading function or sequence, which kind of processing is also called 'applying a matched filter'. If BPSK modulation was used for applying the spread spectrum function, the output of this process is a peak at the middle of the sequence of correlation overlap-add values, whereby the sign of such peak represents the value of the desired watermark signal information bit. If QPSK was used two peaks will be present in the sequence of correlation values, whereby each peak represents one bit value.
Because in most cases the original signal is not available at receiver side the shaping in the spectral domain is to be reversed in order to increase the detectability of the embedded watermark signal, e.g. by a applying reversed psycho-acoustic processing.

Invention

It is desirable to use watermarking also in connection with high-quality audio signal processing.
A problem to be solved by the invention is to reduce the audibility of the embedded watermark signals but to keep the reliability of the detection of the embedded watermark signals. This problem is solved by the method disclosed in claim 1. An apparatus that utilises this method is disclosed in claim 2. A signal generated in accordance with this method is disclosed in claim 3.
According to the invention, the watermark signal is not only shaped according to psycho-acoustic principles, but is additionally, or effectively, shaped based on the efficiency of the watermarking.
If for each spectral line the phase of a watermark signal value embedded in a given audio signal value with respect to the phase of that audio signal value is not 90 or 270 degrees, or not approximately 90/270 degrees, it is shifted to 90 or 270 degrees or to approximately 90/270 degrees, respectively, whereby the magnitude of the watermark signal value is shortened but the phase is kept unchanged between the audio signal value without embedded watermark signal value and the audio signal value with the embedded watermark signal value. The encoder-side initial shaping and the additional shaping are based on the original audio signal values.
Advantageously, because the watermark signal value is very small with respect to the magnitude of the audio signal value, the resulting shaped signal value is nevertheless nearly the same as with known technology, and therefore the inverse or reverse psycho-acoustical shaping at receiver or decoder side leads to nearly the same reconstructed watermark signal. Normally in the decoder the original audio signal is not available and therefore reverse shaping differs a little from the one in the encoder because the encoder shapes based on the original audio signal whereas the decoder shapes based on the audio signal with embedded watermarking signal. But this difference is negligible because the magnitude of the watermark signal is negligible.
Advantageously, the reverse psycho-acoustic shaping at decoder side can be replaced by whitening the spectrum before applying the decoder PN sequence on the watermark signal. 'Whitening' means multiplying or magnifying the magnitude of each received spectral value of an audio frame such that all audio signal magnitudes (in which the watermark signal is embedded) get the same value in a frame.

Advantageously in the invention the audibility of the watermark signal that is embedded in the useful signal is decreased without affecting its detectability at receiver side.

In principle, the inventive method is suited for transmitting together with an audio or video signal watermark data using a spread spectrum, said method including the steps:

- modulating an encoder spreading function signal by watermark data bits for providing a watermark signal;
- determining the current masking level of said audio or video signal and performing a corresponding psycho-acoustic shaping of said watermark signal;
- embedding said psycho-acoustically shaped watermark signal in said audio or video signal;
- transmitting or transferring said audio or video signal including said embedded watermark signal,

wherein, following said psycho-acoustic shaping, an additional step of additionally shaping said psycho-acoustically shaped watermark signal is performed before embedding it in said audio or video signal in order to reduce on average the magnitude of said watermark signal, whereby for each spectral line the phase of the values of said audio or video signal into which said psycho-acoustically and additionally shaped watermark signal is embedded is kept unchanged by said additional shaping.

In principle the inventive apparatus is suited for transmitting together with an audio or video signal watermark data using a spread spectrum, wherein said apparatus includes:

- means for modulating an encoder spreading function signal by watermark data bits for providing a watermark signal;
- means for determining the current masking level of said audio or video signal;
- means for performing a corresponding psycho-acoustic shaping of said watermark signal;
- means for embedding said psycho-acoustically shaped watermark signal in said audio or video signal;
- means for transmitting or transferring said audio or video signal including said embedded watermark signal,

wherein means which are arranged downstream said psycho-acoustic shaping means and upstream said embedding means and which additionally shape said psycho-acoustically shaped watermark signal in order to reduce on average the magnitude of said watermark signal, whereby for each spectral line the phase of the values of said audio or video signal into which said psycho-acousti-cally and additionally shaped watermark signal is embedded is kept unchanged by said additional shaping means.

In principle the inventive audio or video signal including embedded watermark data is generated including the steps:

- modulating an encoder spreading function signal by watermark data bits for providing a watermark signal;
- determining the current masking level of said audio or video signal and performing a corresponding psycho-acoustic shaping of said watermark signal;
- embedding said psycho-acoustically shaped watermark signal in said audio or video signal,

wherein, following said psycho-acoustic shaping, an additional step of additionally shaping said psycho-acoustically shaped watermark signal is performed before embedding it in said audio or video signal in order to reduce on average the magnitude of said watermark signal, whereby for each spectral line the phase of the values of said audio or video signal into which said psycho-acoustically and additionally shaped watermark signal is embedded is kept unchanged by said additional shaping.

In principle, the inventive method is suited for regaining watermark data bits embedded in a spread spectrum in an audio or video signal, whereby the original watermark data bits were used at encoder side to modulate an encoder spreading function signal for providing a watermark signal,

and wherein the masking level of said audio or video signal was determined and a corresponding psycho-acoustic shaping of said watermark signal was performed,

and wherein said psycho-acoustically shaped watermark signal was additionally shaped in order to reduce on average the magnitude of said watermark signal, whereby the phase of the values of said audio or video signal into which said psycho-acoustically and additionally shaped watermark signal was embedded was kept unchanged by said additional shaping,

and wherein said psycho-acoustically and additionally shaped watermark signal was embedded in said audio or video signal and said audio or video signal carrying said embedded watermark signal was transmitted or transferred,

said method including the steps:

- receiving and optionally synchronising a current frame of said transmitted or transferred audio signal;
- whitening said current frame in order to get a whitened watermark signal frame;
- convolving said whitened watermark signal frame with a time-inversed version of the corresponding encoder spreading function signal and determining from corresponding peaks of the convolution results the bit values of said watermark data,

or correlating said whitened watermark signal frame with the corresponding encoder spreading function signal and determining from corresponding peaks of the correlation results the bit values of said watermark data.

In principle, the inventive apparatus is suited for regaining watermark data bits embedded in a spread spectrum in an audio or video signal, whereby the original watermark data bits were used at encoder side to modulate an encoder spreading function signal for providing a watermark signal,

and wherein the masking level of said audio or video signal was determined and a corresponding psycho-acoustic shaping of said watermark signal was performed,

and wherein said psycho-acoustically shaped watermark signal was additionally shaped in order to reduce on average the magnitude of said watermark signal, whereby the phase of the values of said audio or video signal into which said psycho-acoustically and additionally shaped watermark signal was embedded was kept unchanged by said additional shaping,

and wherein said psycho-acoustically and additionally shaped watermark signal was embedded in said audio or video signal and said audio or video signal carrying said embedded watermark signal was transmitted or transferred,

said apparatus including:

- means for receiving and optionally synchronising a current frame of said transmitted or transferred audio signal;
- means for whitening said current frame in order to get a whitened watermark signal frame;
- means for convolving said whitened watermark signal frame with a time-inversed version of the corresponding encoder spreading function signal and for determining from corresponding peaks of the convolution results the bit values of said watermark data,

or means for correlating said whitened watermark signal frame with the corresponding encoder spreading function signal and for determining from corresponding peaks of the correlation results the bit values of said watermark data.

Advantageous additional embodiments of the invention are disclosed in the respective dependent claims.

Drawings

Exemplary embodiments of the invention are described with reference to the accompanying drawings, which show in:

Fig. 1    Watermark signal encoder and watermark signal decoder according to the invention, using spread spectrum technique;
Fig. 2    Known watermark signal addition;
Fig. 3    Inventive watermark signal addition;
Fig. 4    Received and re-shaped signal stemming from known watermark signal addition;
Fig. 5    Received and re-shaped signal stemming from inventive watermark signal addition;
Fig. 6    Spectral representation of a current audio signal frame;
Fig. 7    Related calculated hearing threshold;
Fig. 8    Watermark input signal;
Fig. 9    Psycho-acoustically shaped watermark signal.

Exemplary embodiments

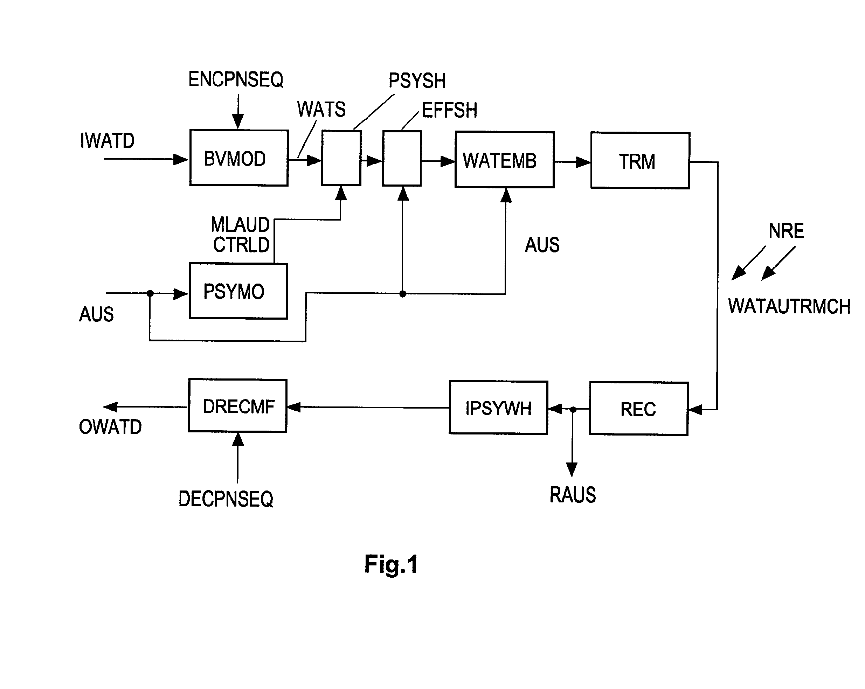

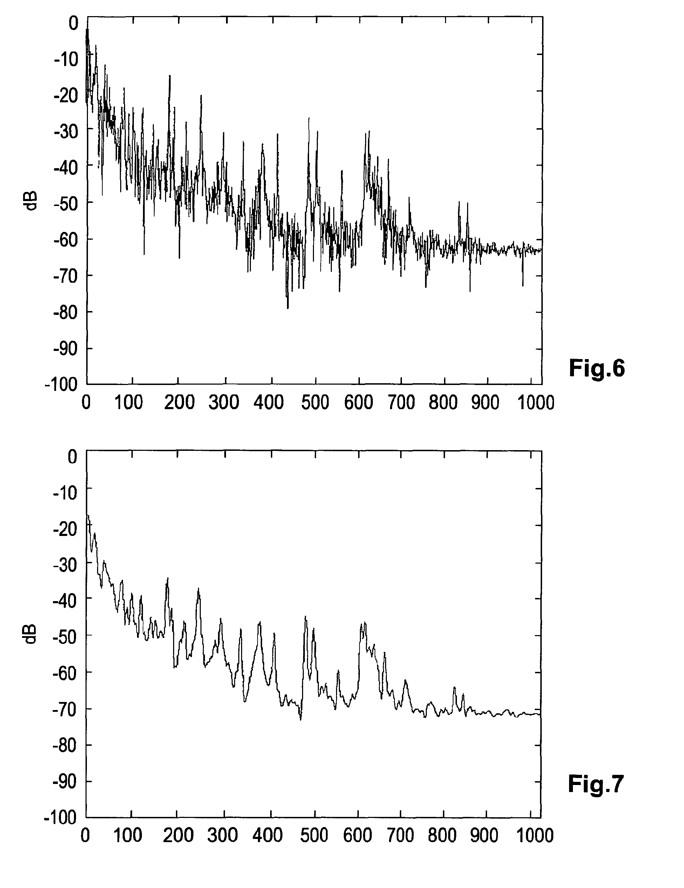

In the watermark signal encoder section in Fig. 1 an original audio input signal AUS like that depicted in Fig. 6 is encoded, or processed such that the masking level threshold information or the energy level information for an encoding is retrieved, using a psycho-acoustic model calculator PSYMC. The resulting masking level threshold (shown in Fig. 7) information or energy level related information MLAUD for the audio data or its frequency spectrum coefficients (resulting e.g. from an FFT or an MDCT) of a current audio signal input frame is fed together with related control data or coding parameters CTRLD to a psycho-acoustic shaping stage PSYSH. In Fig. 6 to 9 the vertical axis shows amplitudes in 'dB' and the horizontal axis shows 1024 spectral lines of the audio, masking and watermarking signals resulting from e.g. a 1024-points FFT, which FFT provides a magnitude and a phase value for each spectral point.

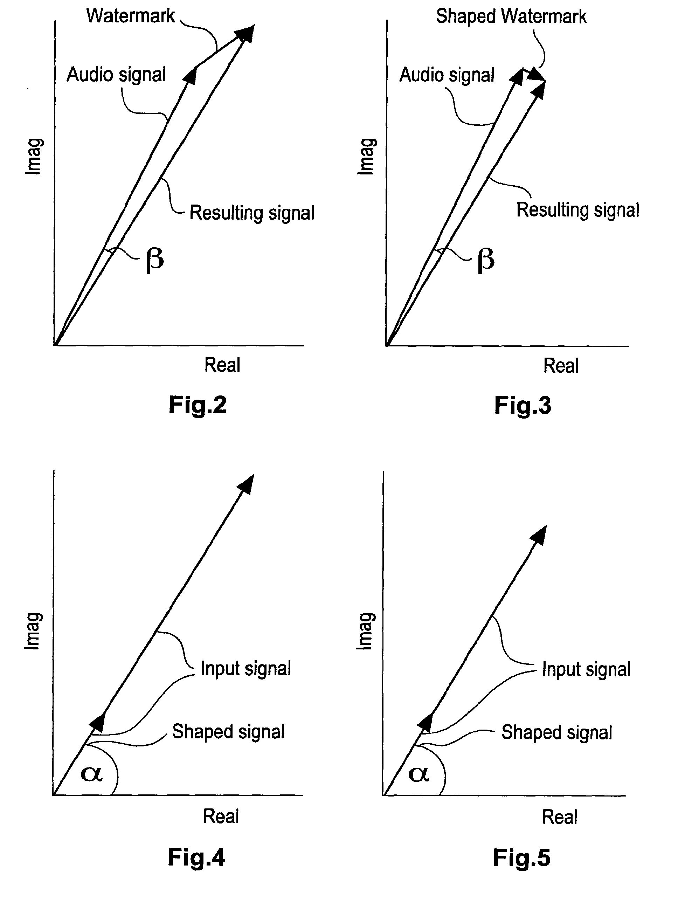

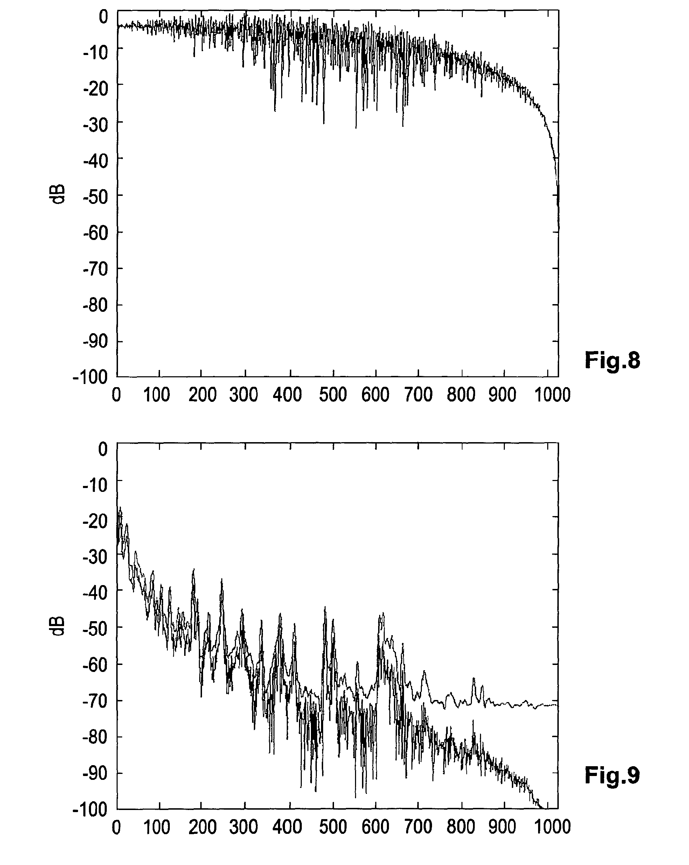

Input watermark data IWATD enter a bit value modulation stage BVMOD in which a current bit value of the IWATD data is used to correspondingly modulate a current encoder pseudo-noise (PN) sequence section ENCPNSEQ. The unshaped, or original, watermark input signal IWATD of a current audio signal frame is depicted in Fig. 8. For example, if the current bit value is '+1', the encoder pseudo-noise sequence section ENCPNSEQ is left unchanged whereas, if the current bit value is '0' or '-1', the encoder pseudo-noise sequence section ENCPNSEQ is inverted. Sequence ENCPNSEQ consists of e.g. a 'random' distribution of '0' or '-1' and '+1'. The pseudo-noise sequence section ENCPNSEQ can have a length corresponding to that of the audio signal frames.
The pieces of watermark signals WATS resulting from stage BVMOD are fed to a psycho-acoustic shaping stage PSYSH in which they are shaped in amplitude according to the current psycho-acoustic properties of the audio signal AUS. This can be performed, in the frequency domain, by shaping the current watermark signal WATS according to (i.e. its amplitudes envelope is made conforming to) the corresponding frame section masking level threshold or energy level shape or curve in masking level threshold information MLAUD. Fig. 9 shows the masking level threshold of Fig. 7 together with the correspondingly psycho-acoustically shaped watermarking signal (bold curve) of Fig. 8. Such shaping can be carried out by multiplying each spectral value of Fig. 8 by the corresponding spectral value amplitude of the masking curve of Fig. 7. The psycho-acoustically shaped watermark signals coming from stage PSYSH are further shaped in an effective-shaping stage EFFSH and are thereafter combined with, or added to, corresponding frame sections of audio data AUS in a watermark embedding stage WATEMB. The effective-shaping stage EFFSH performs an additional shaping that advantageously reduces the level or magnitudes of the watermark signal information without loss of detectability at decoder side of the embedded watermark signals, as will be explained in connection with figures 2 to 5. Stage EFFSH is controlled by the audio input signal AUS, too. The 'effective shaping' checks for each magnitude/phase pair of the psycho-acoustically shaped FFT output whether or not the phase between the audio signal spectral value and the related watermark signal value is already 90 or 270 degrees or nearly 90 or 270 degrees. If not, the 'effective shaping' takes place in that to the current watermark value pair a phase of (nearly) 90 or 270 degrees with respect to the phase of the current audio signal value pair is assigned and thereby the magnitude of the current watermark value pair is decreased correspondingly.

Tests with different audio and watermark signals have shown that the magnitudes of the watermark value pairs can be shortened by about 30% on average.

The shapings are carried out in the frequency domain, and can additionally be carried out in the time domain. Adding of the shaped watermark signal to the original audio signal is preferably performed in time domain.

The output signal of stage WATEMB passes through transmitter stage TRM, which includes a channel encoder or modulator and e.g. a D/A converter, and transmission channel WATAUTRMCH to a watermark signal decoder or receiver. Unintended, in the watermarked audio transmission channel WATAUTRMCH a noise or reverberation or echo signal NRE can be added.

In the watermark signal decoder or receiver section in Fig. 1 the distorted transmitted signal enters a receiver stage REC wherein a channel decoding or demodulation and e.g. a synchronisation is performed. Its output signal passes via an inverse psycho-acoustic shaping or whitening stage IPSYWH to a data recovery matched filter (or time-inverse convolution) stage DRECMF. In case of inverse psycho-acoustic shaping the masking level threshold, or energy level, information MLAUD and/or the related control data or coding parameters CTRLD can be transmitted, too, and evaluated at decoder side, or are not transmitted but calculated in the decoder.

Stage DRECMF convolves, or filters, the watermark signals of a current incoming audio frame with a corresponding decoder pseudo-noise sequence section DRECPNSEQ that is pre-known by, or stored in, the decoder and that is a time-inverse version of the related encoder pseudo-noise sequence section ENCPNSEQ, wherein each correctly transmitted watermark bit appears e.g. as a peak in the middle of the convolution results. As an alternative, stage DRECMF correlates the watermark signals of a current incoming audio frame with a decoder pseudo-noise sequence section DRECPNSEQ that is pre-known by, or stored in, the decoder and that corresponds to the related encoder pseudo-noise sequence section ENCPNSEQ, wherein each correctly transmitted watermark bit appears e.g. as a peak in the middle of the correlation results. Stage DRECMF provides the reconstructed watermark signal decoder output watermark data OWATD which correspond to the input watermark data IWATD.

Basically, adding the 'watermark signal' and the original 'audio signal' in the encoder is done in time domain, since in this case the original signal needs not be converted. But adding in time domain and adding in frequency domain is mathematically equivalent. Fig. 2 depicts addition of a watermark signal to an audio signal at encoder side for one spectral line in the real/imaginary plain. Note that the true magnitude of the 'watermark signal' is depicted in the drawing in a severely exaggerated fashion. The real magnitude of the watermark signal as resulting from the psycho-acoustic shaping in stage PSYSH has a level that is about 20 to 70dB lower than that of the audio signal, cf. Fig. 7 and Fig. 9.

As depicted in Fig. 4, at decoder side only the 'resulting signal' is received as 'input signal'. Through whitening (will be explained below) or reverse psycho-acoustic shaping it is normalised to an appropriate magnitude. In this example it is reduced in magnitude to the depicted signal 'shaped signal'. However, because the embedded watermark signal portion is much smaller than the audio signal portion, this reverse shaping or whitening is dependent practically on the audio signal magnitude only, i.e. the magnitude of the 'input signal' after whitening or inverse psycho-acoustic shaping, and it is independent from the watermark signal magnitude. Only the phase β between a value of the original audio signal AUS and a corresponding value of the transmitted and received 'resulting signal', or the reverse shaped or whitened signal, carries the watermark signal information.

According to the invention, therefore it is possible to add at encoder side a watermark signal with even smaller magnitude (but different phase) as shown in Fig. 3. Basically the additionally or effectively shaped 'watermark signal' vector has a phase of about 90 or 270 degrees with respect to the related vector of the 'audio signal', which results at decoder side in a spectral line having

the same phase $\alpha$ but a different magnitude of the 'input signal'. Although the magnitude is different it ultimately results in the decoder in the same whitened or inversely psycho-acoustically shaped spectrum of 'shaped signals', as depicted in Fig. 5. This means that the embedded watermark signal is less audible due to its smaller magnitude, but that advantageously its detectability in the decoder (which is only related to the phase $\beta$ if the watermark signal has a small magnitude) has not changed.

'Shaping' at encoder side represents a multiplication of the watermark signal WATS by the masking level of the audio signal, whereas 'reverse shaping' at decoder side represents a division by the masking level of the received audio signal in which the watermark signal is embedded.

As an alternative, at decoder side stage IPSYWH carries out a spectrum whitening instead. 'Whitening' means multiplying or magnifying the magnitude of each received spectral value of an audio frame such that all audio signal magnitudes (in which the watermark signal is embedded) get the same value in a frame. Thereby the audio signal itself is seriously distorted, but the resulting effect is that the magnitudes of the watermark signal spectral values get a value that basically corresponds to their original magnitude level according to Fig. 8. The received non-whitened (i.e. non-manipulated) audio signal RAUS is used for the other decoder audio signal processing purposes.

Tests have shown that applying whitening instead of reverse psycho-acoustic shaping achieves results that are as good or nearly as good as when applying reverse psycho-acoustic shaping at decoder side.

Mathematically, the addition of the watermark signal and the audio signal is a vector addition for each spectral line:

$$\vec{a} + \vec{w} = \vec{r},$$

wherein $\vec{a}$ represents the audio signal, $\vec{w}$ the watermark signal and $\vec{r}$ the resulting signal that is transmitted. The inventive additional 'effective shaping' is carried out such that a watermark vector $\vec{v}$ is used which satisfies

$$\vec{a} + \vec{v} = \vec{p},$$

wherein vector $\vec{p}$ as the new resulting vector has the same direction $\alpha$ as that of vector $\vec{r}$ but wherein the amplitude of vector $\vec{v}$ is smaller than the amplitude of vector $\vec{w}$.
This leads to:

$$r = a + w;$$

$$rr = \text{real}(r);$$

$$ri = \text{imag}(r);$$

$$ar = \text{real}(a);$$

$$ai = \text{imag}(a);$$

$$f = (ai*rr - ar*ri) / (ai*ri + ar*rr);$$

$$v = f*(ai - ar*i),$$

wherein 'f' is a factor and 'ai - ar*i' means that vector '$v$' has a phase of 90 or 270 degrees with respect to vector '$a$'.

The invention can also be used when watermarking digital video signals.

**Claims**

1. Method for transmitting together with an audio or video signal (AUS) watermark data (IWATD) using a spread spectrum, said method including the steps:

   - modulating (BVMOD) an encoder spreading function signal (ENCPNSEQ) by watermark data bits for providing a watermark signal (WATS);
   - determining (PSYMO) the current masking level of said audio or video signal and performing a corresponding psycho-acoustic shaping (PSYSH) of said watermark signal;
   - embedding (WATEMB) said psycho-acoustically shaped watermark signal in said audio or video signal;
   - transmitting or transferring (TRM) said audio or video signal including said embedded watermark signal,

   **characterised by** the additional step of, following said psycho-acoustic shaping (PSYSH), additionally shaping (EFFSH) said psycho-acoustically shaped watermark signal before embedding it in said audio or video signal in order to reduce on average the magnitude of said watermark signal, whereby for each spectral line the phase ($\alpha$) of the values of said audio or video signal into which said psycho-acoustically and additionally shaped watermark signal is embedded is kept unchanged by said additional shaping.

**2.** Apparatus for transmitting together with an audio or video signal (AUS) watermark data (IWATD) using a spread spectrum, said apparatus including:

- means (BVMOD) for modulating an encoder spreading function signal (ENCPNSEQ) by watermark data bits for providing a watermark signal (WATS);
- means (PSYMO) for determining the current masking level of said audio or video signal;
- means (PSYSH) for performing a corresponding psycho-acoustic shaping of said watermark signal;
- means (WATEMB) for embedding said psycho-acoustically shaped watermark signal in said audio or video signal;
- means (TRM) for transmitting or transferring said audio or video signal including said embedded watermark signal,

**characterised by** means (EFFSH) which are arranged downstream said psycho-acoustic shaping means (PSYSH) and upstream said embedding means (WATEMB) and which additionally shape said psycho-acoustically shaped watermark signal in order to reduce on average the magnitude of said watermark signal, whereby for each spectral line the phase ($\alpha$) of the values of said audio or video signal into which said psycho-acoustically and additionally shaped watermark signal is embedded is kept unchanged by said additional shaping means (EFFSH).

**3.** Audio or video signal (AUS) including embedded watermark data (IWATD), said audio or video signal having been generated including the steps:

- modulating (BVMOD) an encoder spreading function signal (ENCPNSEQ) by watermark data bits for providing a watermark signal (WATS);
- determining (PSYMO) the current masking level of said audio or video signal and performing a corresponding psycho-acoustic shaping (PSYSH) of said watermark signal;
- embedding (WATEMB) said psycho-acoustically shaped watermark signal in said audio or video signal,

**characterised by** the additional step of, following said psycho-acoustic shaping (PSYSH), additionally shaping (EFFSH) said psycho-acoustically shaped watermark signal before embedding it in said audio or video signal in order to reduce on average the magnitude of said watermark signal, whereby for each spectral line the phase ($\alpha$) of the values of said audio or video signal into which said psycho-acoustically and additionally shaped watermark signal is embedded is kept unchanged by said additional shaping.

**4.** Method for regaining watermark data bits embedded in a spread spectrum in an audio or video signal, whereby the original watermark data bits (IWATD) were used at encoder side to modulate (BVMOD) an encoder spreading function signal (ENCPNSEQ) for providing a watermark signal (WATS),
and wherein the masking level of said audio or video signal was determined (PSYMO) and a corresponding psycho-acoustic shaping (PSYSH) of said watermark signal was performed,
and wherein said psycho-acoustically shaped (PSYSH) watermark signal was additionally shaped (EFFSH) in order to reduce on average the magnitude of said watermark signal, whereby the phase ($\alpha$) of the values of said audio or video signal into which said psycho-acoustically and additionally shaped watermark signal was embedded was kept unchanged by said additional shaping,
and wherein said psycho-acoustically and additionally shaped watermark signal was embedded (WATEMB) in said audio or video signal and said audio or video signal carrying said embedded watermark signal was transmitted or transferred,
said method including the steps:

- receiving (REC) and optionally synchronising a current frame of said transmitted or transferred audio signal;
- whitening (IPSYWH) said current frame in order to get a whitened watermark signal frame;
- convolving (DRECMF) said whitened watermark signal frame with a time-inversed version of the corresponding encoder spreading function signal (DECPNSEQ) and determining from corresponding peaks of the convolution results the bit values of said watermark data (OWATD),

or correlating (DRECMF) said whitened watermark signal frame with the corresponding encoder spreading function signal (DECPNSEQ) and determining from corresponding peaks of the correlation results the bit values of said watermark data (OWATD).

**5.** Apparatus for regaining watermark data bits embedded in a spread spectrum in an audio or video signal, whereby the original watermark data bits (IWATD) were used at encoder side to modulate (BVMOD) an encoder spreading function signal (ENCPNSEQ) for providing a watermark signal (WATS),
and wherein the masking level of said audio or video signal was determined (PSYMO) and a corresponding psycho-acoustic shaping (PSYSH) of said watermark signal was performed,

and wherein said psycho-acoustically shaped (PSYSH) watermark signal was additionally shaped (EFFSH) in order to reduce on average the magnitude of said watermark signal, whereby the phase ($\alpha$) of the values of said audio or video signal into which said psycho-acoustically and additionally shaped watermark signal was embedded was kept unchanged by said additional shaping,

and wherein said psycho-acoustically and additionally shaped watermark signal was embedded (WATEMB) in said audio or video signal and said audio or video signal carrying said embedded watermark signal was transmitted or transferred,

said apparatus including:

- means (REC) for receiving and optionally synchronising a current frame of said transmitted or transferred audio signal;
- means (IPSYWH) for whitening said current frame in order to get a whitened watermark signal frame;
- means (DRECMF) for convolving said whitened watermark signal frame with a time-inversed version of the corresponding encoder spreading function signal (DECPNSEQ) and for determining from corresponding peaks of the convolution results the bit values of said watermark data (OWATD),

or means (DRECMF) for correlating said whitened watermark signal frame with the corresponding encoder spreading function signal (DECPNSEQ) and for determining from corresponding peaks of the correlation results the bit values of said watermark data (OWATD).

6. Method according to claim 1 or 4, or apparatus according to claim 2 or 5, or signal according to claim 3, wherein said spreading function signal is a pseudo-noise sequence (ENCPNSEQ, DECPNSEQ).

7. Method according to claim 1 or apparatus according to claim 2 or signal according to claim 3, wherein said psycho-acoustical shaping and said additional shaping are carried out not only in the frequency domain but also in the time domain.

Fig.1

**Fig.2**

**Fig.3**

**Fig.4**

**Fig.5**

**Fig.6**

**Fig.7**

**Fig.8**

**Fig.9**

**European Patent Office**

**EUROPEAN SEARCH REPORT**

Application Number

EP 04 09 0177

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 828 372 A (NIPPON ELECTRIC CO) 11 March 1998 (1998-03-11) * column 3, line 40 - column 5, line 4; claims 1-4; figures 1,2 * ----- | 1-7 | G10L19/00 G11B20/00 H04N1/32 G06T1/00 |

TECHNICAL FIELDS SEARCHED (Int.Cl.7)

G10L
G11B
H04N
G06T

The present search report has been drawn up for all claims

| Place of search | Date of completion of the search | Examiner |
|---|---|---|
| Munich | 12 October 2004 | Zimmermann, E |

EPO FORM 1503 03.82 (P04C01)

**ANNEX TO THE EUROPEAN SEARCH REPORT
ON EUROPEAN PATENT APPLICATION NO.**

EP 04 09 0177

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2004

| Patent document cited in search report | | Publication date | Patent family member(s) | | Publication date |
|---|---|---|---|---|---|
| EP 0828372 | A | 11-03-1998 | US | 5848155 A | 08-12-1998 |
| | | | EP | 0828372 A2 | 11-03-1998 |
| | | | JP | 3262159 B2 | 04-03-2002 |
| | | | JP | 10308867 A | 17-11-1998 |

For more details about this annex : see Official Journal of the European Patent Office, No. 12/82